(19) Europäisches Patentamt

European Patent Office

Office européen des brevets

(11) Veröffentlichungsnummer: **0 320 732 B1**

(12) **EUROPÄISCHE PATENTSCHRIFT**

(45) Veröffentlichungstag der Patentschrift: **13.05.92**

(21) Anmeldenummer: **88120234.5**

(22) Anmeldetag: **03.12.88**

(51) Int. Cl.5: **G01N 35/00**

(54) **Analysesystem zur Bestimmung eines Bestandteils einer Flüssigkeit.**

(30) Priorität: **17.12.87 DE 3742786**

(43) Veröffentlichungstag der Anmeldung:
**21.06.89 Patentblatt  89/25**

(45) Bekanntmachung des Hinweises auf die
Patenterteilung:
**13.05.92 Patentblatt  92/20**

(84) Benannte Vertragsstaaten:
**AT BE CH DE ES FR GB GR IT LI LU NL SE**

(56) Entgegenhaltungen:
**FR-A- 905 047**
**US-A- 3 932 133**
**US-A- 4 647 431**

(73) Patentinhaber: **BOEHRINGER MANNHEIM GMBH**
**Sandhofer Strasse 116**
**W-6800 Mannheim 31(DE)**

(72) Erfinder: **Dietze, Werner**
**Anton-Bartl-Strasse 7**
**W-8132 Tutzing(DE)**
Erfinder: **Füllemann, Rainer, Dr.**
**Wintergasse 85**
**W-6940 Weinheim(DE)**
Erfinder: **Lutz, Thomas**
**Lemaitre-Strasse 10f**
**W-6800 Mannheim 31(DE)**

(74) Vertreter: **Pfeifer, Hans-Peter, Dr.rer.nat.**
**Patentanwalt Nowackanlage 15**
**W-7500 Karlsruhe 1(DE)**

## Beschreibung

Die Erfindung betrifft ein Analysesystem zur Bestimmung eines Bestandteils einer Flüssigkeit mit einem Testträger, welcher mindestens ein Testfeld aufweist und einem Auswertegerät zur Messung einer für die Konzentration des zu be - stimmenden Bestandteils charakteristischen meßbaren Veränderung des Testfeldes. Eine Temperierungseinrichtung ist vorgesehen, um das Testfeld vor der Auswertung auf eine erhöhte Temperatur aufzuheizen.

Zur qualitativen oder quantitativen analytischen Bestimmung von Flüssigkeiten, insbesondere Körperflüssigkeiten wie Blut und Urin, werden zunehmend sogenannte trägergebundene Tests verwendet. Bei diesen sind Reagenzien in entsprechenden Testfeldern eines Testträgers in trockenem Zustand eingebettet. Wenn das Testfeld mit der Probe in Kontakt gebracht wird, führt die Reaktion von Probe und Reagenzien zu einer meßbaren Veränderung des Testfeldes.

Zur Auswertung werden Auswertegeräte eingesetzt. Sie dienen zur Messung der durch die Reaktion verursachten Veränderung des Testfeldes. Meist besteht diese Veränderung in einem Farbumschlag, der von dem Gerät reflexionsphotometrisch gemessen wird. Es sind jedoch auch Testträger bekannt, bei denen andere physikalische Meßgrößen, z.B. die Fluoreszenz, bestimmt werden.

Die Testträger sind häufig als Teststreifen ausgebildet, bei denen eines oder mehrere Testfelder auf einem länglichen Kunststoffträger aufgebracht sind. Es sind jedoch auch Testträger bekannt, die als quadratische oder rechteckige Plättchen gestaltet sind. Die Auswertegeräte sind üblicherweise auf Testträger eines bestimmten Typs eines bestimmten Herstellers abgestimmt. Testträger und Auswertegerät bilden ein Analysesystem.

Vielfach ist es wünschenswert, Testfelder während der Reaktion auf eine erhöhte Temperatur aufzuheizen. Dies geschieht meist mit Hilfe einer erwärmten metallischen Fläche, gegen die der Testträger mit seiner Testfeldseite oder auchmit seiner Rückseite gedrückt wird. Alternativ werden Inkubationskammern eingesetzt, in denen eine erhöhte Temperatur herrscht und in denen die Testträger zwischen der Aufgabe der Probe und der Auswertung verbleiben. Durch die Erwärmung läßt sich häufig eine Beschleunigung der Reaktion und eine Erhöhung der Nachweisempfindlichkeit erreichen.

Diese vorbekannten Verfahren können jedoch nicht in jeder Hinsicht befriedigen. Vor allem erfolgt das Aufheizen sehr langsam. Außerdem ist es nicht möglich, gezielt enge räumliche Bereiche des Testträgers aufzuheizen, wie dies besonders bei Mehrfachteststreifen für die Urinanalyse wünschenswert ist. Die verschiedenen Testfelder eines derartigen Mehrfachteststreifens arbeiten nämlich häufig bei verschiedenen Temperaturen optimal, und es bestanden bisher erhebliche Schwierigkeiten, die chemische Zusammensetzung der Testfelder so zu modifizieren, daß alle bei der gleichen Temperatur ausgewertet werden können. Wesentlich einfacher wäre es, wenn hier eine Möglichkeit bestünde, die einzelnen Testfelder gezielt und schnell aufzuheizen, ohne daß die Nachbartestfelder davon beeinflußt werden.

Der Erfindung liegt daher die Aufgabe zugrunde, eine schnelle und gezielte Temperierung der Testfelder von Testträgern zur Verfügung zu stellen.

Die Aufgabe wird bei einem Analysesystem der eingangs bezeichneten Art dadurch gelöst, daß der Testträger mindestens eine, einem Testfeld zugeordnete metallisch leitende Schicht aufweist, welche parallel zu dem Testfeld verläuft und in thermischem Kontakt zu ihm steht, das Auswertegerät eine Induktionsheizeinrichtung aufweist, welche ein magnetisches Wechselfeld erzeugt und die Führung des Testträgers in dem Auswertegerät so gestaltet ist, daß sich die metallisch leitende Schicht zumindest vor der Messung im Wirkbereich des magnetischen Wechselfeldes befindet.

Die metallisch-leitende Schicht kann beispielsweise aus metallisiertem Kunststoff bestehen. Besonders einfach und gut geeignet ist eine Metallfolie, insbesondere aus Aluminium oder Kupfer, mit einer Stärke von weniger als 0,5 mm, bevorzugt etwa 0,2 mm.

In bestimmten Anwendungsfällen kann es zweckmäßig sein, eine metallisch-leitende Schicht aus ferromagnetischem Material zu verwenden. Die bei der Ummagnetisierung eines solchen Materials im magnetischen Wechselfeld entstehende Verlustwärme führt zu einer besonders schnellen Aufheizung der Schicht.

Wie erwähnt, eignet sich die Erfindung insbesondere zur Anwendung bei Mehrfachteststreifen. Hier ermöglicht sie ein gezieltes Aufheizen einzelner Testfelder, wobei in diesem Fall nur diesen Testfeldern eine metallisch leitende Schicht zugeordnet ist. Soweit eine verschieden starke Aufheizung verschiedener Testfelder gewünscht wird, kann dies zweckmäßigerweise dadurch geschehen, daß die metallisch leitenden Schichten, die den Testfeldern zugeordnet sind, verschieden dick sind und/oder aus verschiedenen Materialien bestehen.

Die Erfindung erweist sich in der Praxis als außerordentlich vorteilhaft:

- Die Erwärmung von Testfeldern wurde bisher, obwohl ihre Vorteile für den Reaktionsablauf jedem Fachmann geläufig waren, vielfach vermieden, weil sie zu einer unzulässigen Probenverdunstung führte. Durch die ungewöhnlich schnelle erfindungsgemäße Aufheizung ist die Verdunstung so gering, daß sie die Messung nicht stört.

- Durch die gezielte Aufheizung ist der Energieverbrauch sehr gering. Die erfindungsgemäße Temperierung eignet sich deswegen besonders für Batteriegeräte.
- Die Temperierung ist im Rahmen der bei üblichen Auswertegeräten vorhandenen Toleranzen der Testträgerführung weitgehend unabhängig vom Abstand zwischen der Induktionsheizeinrichtung und dem Testfeld.
- Die Temperierung erweist sich als praktsich unabhängig von Luftströmungen in der Umgebung des Teststreifens.
- Die metallisch leitende Schicht ermöglicht durch die induktive Kopplung mit der Induktionsheizeinrichtung zugleich in einfacher Weise die Lokalisierung eines entsprechenden Testfeldes im Gerät.

Die Erfindung wird im folgenden anhand eines in den Figuren schematisch dargestellten Ausführungsbeispiele näher erläutert; es zeigen:

Fig. 1 ein erfindungsgemäßes Analysesystem in einer teilweise geschnittenen, teilweise perspektivischen Darstellung.

Fig. 2 einen Längsschnitt durch einen Testträger für ein erfindungsgemäßes Analysesystem.

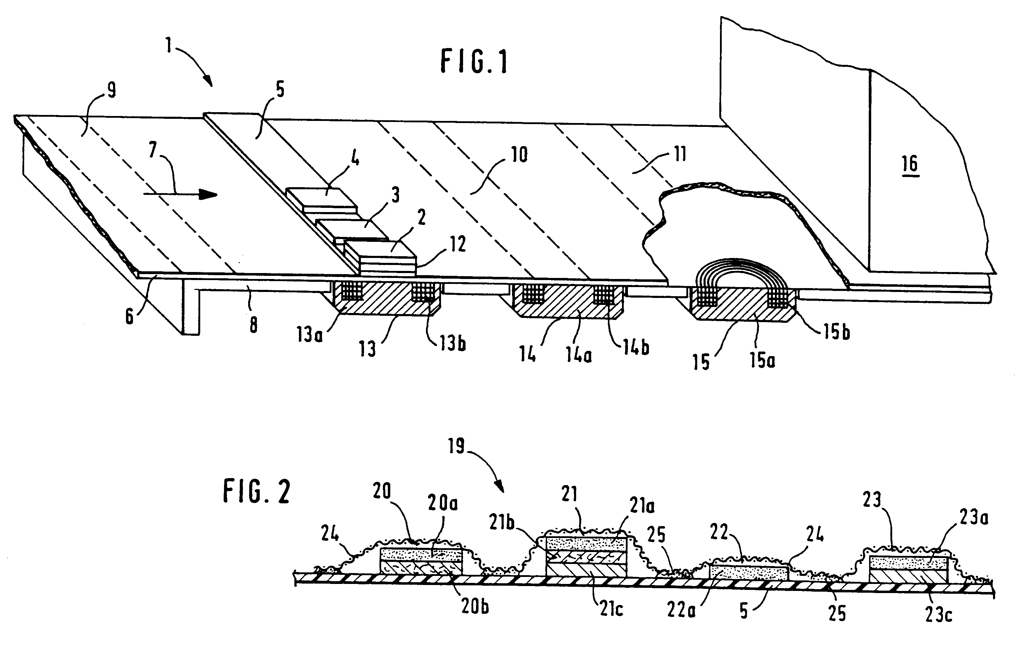

In Figur 1 ist der Teil eines Testträger-Auswertegerätes dargestellt, der der Zuführung, Temperierung und photometrischen Messung dient. Der dargestellte Testträger ist als Mehrfachteststreifen 1 mit mehreren nebeneinanderangeordneten Testfeldern 2,3,4 ausgebildet, die auf einer Basisschicht 5 befestigt sind. Derartige Mehrfachteststreifen sind bekannt. Sie werden in eine Urinprobe eingetaucht, und nach einer vorbestimmten Inkubationszeit wird der Farbumschlag der Testfelder visuell oder apparativ ausgewertet, wobei jedes Testfeld dem Nachweis eines bestimmten Bestandteils der Probe dient. Die Testfelder sind deswegen in ihrer chemischen Zusammensetzung und in ihrem physikalischen, häufig mehrschichtigen, Aufbau verschieden.

Die Teststreifen werden mit Hilfe einer Papierbahn 6 aus saugfähigem Papier in Richtung des Pfeils 7 von links nach rechts über einen ebenen Transporttisch 8 transportiert. Da sie nach dem Eintauchen in den Urin feucht sind, haften sie ausreichend auf der Papierbahn 6. In Figur 1 ist der Übersichtlichkeit halber nur ein Teststreifen 1 dargestellt. Normalerweise werden auf die Papierbahn 6 jedoch in gleichmäßigen Abständen mehrere Teststreifen aufgelegt, die nacheinander ausgewertet werden. Die entsprechenden Positionen 9,10,11 auf der Papierbahn 6 sind in der Figur mit gestrichelten Linien markiert.

Der Transport der Papierbahn 6 erfolgt schrittweise, wobei die Schrittlänge dem Abstand der Teststreifen 1 entspricht. Der gleichmäßige Abstand der Teststreifen läßt sich dabei leicht dadurch erreichen, daß diese jeweils bei Stillstand der Papierbahn 6 an einer bestimmten (durch eine geeignete Führung oder Markierung definierten) Stelle aufgelegt werden.

Das Testfeld 2 ist mit einer Metallfolie 12 unterlegt. Sie kann beispielsweise auf der Basisschicht 5 aufgeklebt sein. Das Testfeld 2 ist dann wiederum auf die Metallfolie 12 aufgeklebt.

In den Transporttisch 8 sind mehrere Induktionsheizeinrichtungen 13,14 und 15 eingelassen. Sie bestehen jeweils aus einem Ferrit-Spulenkörper 13a,14a,15a und einer Spule 13b,14b, 15b. Im Bereich der Induktionsheizeinrichtung 15 ist die Papierbahn aufgeschnitten dargestellt, so daß man den kreisförmigen Aufbau des Spulenkörpers und der Spule erkennen kann.

Um ein Testfeld auf eine erhöhte Temperatur zu erwärmen, muß es in den Wirkbereich einer Induktionsheizeinrichtung gebracht werden. Das Feld 2 befindet sich in Fig. 1 im Bereich des magnetischen Feldes, das von der Induktionsheizeinrichtung 13 ausgeht, wenn dessen Spule 13b von einem elektrischen Wechselstrom durchflossen wird. Das entsprechende Testfeld eines auf den Positionen 10 oder 11 aufliegenden Teststreifen befindet sich im Wirkbereich des von den Induktionscheizeinrichtungen 14 und 15 ausgehenden magnetischen Wechselfeldes. Der Abstand zwischen Spule und Metallfolie sollte möglichst klein sein. In der Praxis haben sich 3 bis 5 mm bewährt.

Im Betrieb wird an die Spule 13b eine elektrische Wechselspannung angelegt. Praktisch bewährt hat sich eine Frequenz von 50 kHz. Spannungsquellen ausreichender Leistung im geeigneten Frequenzbereich sind kommerziell erhältlich und müssen daher nicht näher erläutert werden.

Durch das magnetische Wechselfeld werden in der Metallfolie 12 Wirbelströme induziert, die sich in thermische Energie umwandeln und somit zu einer Erwärmung der Metallfolie 12 und damit des Testfeldes 2 führen, welches die Metallfolie vollflächig berührt und deswegen in gutem thermischen Kontakt zu diesem steht.

Wenn ein Testträger 1, wie erwähnt, schrittweise über den Transporttisch 8 transportiert wird, wobei die Position des in der Figur dargestellten Teststreifens und die Positionen 10 und 11 äquidistante Haltepunkte bilden, an denen jeweils eine Induktionsheizeinrichtung vorgesehen ist, so kann jeweils während der Stillstandszeit zwischen den Transportschritten eine induktive Aufheizung des über den Induktionsheizeinrichtungen 13,14,15 befindlichen Testfeldes erfolgen.

Überraschenderweise hat sich gezeigt, daß die intermittierende Aufheizung zu einer weitgehend konstanten Erwärmung des Testfeldes führt. Dabei wird zweckmäßigerweise die in transportrichtung erste Induktionsheizeinrichtung 13 mit einer erheblich höheren Leistung betrieben wird, um ein schnelles Aufheizen zu gewährleisten. Die weiteren Induktionsheizeinrichtungen dienen dann lediglich der Konstanthaltung der Temperatur. Die Heizleistung der ersten Induktionsheizeinrichtung ist mindestens doppelt so hoch wie die der folgenden.

Nach der Temperierung gelangen die Teststreifen in den Bereich einer Photometereinheit 16, in der der Farbumschlag auf den Testfeldern photometrisch vermessen wird. Der Aufbau der Photometereinheit 16 ist für die Erfindung nicht wesentlich. Wichtig ist jedoch, daß die photometrische Messung in einer Position erfolgt, die einem Haltepunkt der schrittweise transportierten Teststreifen entspricht.

Beim Eintreten eines mit einer Metallfolie versehenen Testfeldes in den Wirkbereich einer Induktionsheizeinrichtung werden deren elektromagnetische Eigenschaften verändert. Man spricht von einer induktiven Kopplung zwischen der Metallfolie und der Spule. Dies läßt sich vorteilhaft nutzen, in dem man mit Hilfe einer für derartige Zwecke bekannten elektronischen Schaltung, z.B. die Änderung der Stromstärke im Primärkreis der Spule nachweist. Auf diese Weise läßt sich kontrollieren, ob der Testträger korrekt über der jeweiligen Induktionsheizeinrichtung positioniert ist.

Fig. 2 ist eine detaillierte Darstellung eines Mehrfachteststreifens 19, wie er für ein erfindungsgemäßes Analysesystem besonders geeignet ist. Auf der Basisschicht 5 sind mehrere Testfelder 20,21,22 und 23 angeordnet, die teilweise mehrschichtig aufgebaut sind. die Testfelder sind mit Hilfe eines darüber gespannten Netzes 24 befestigt, das durch Schmelzkleben in den Befestigungsbereichen 25 mit der Basisschicht 5 (üblicherweise einer Kunststoffolie) verbunden ist. Die einzelnen Schichten der Testträger sind vorzugsweise getrennt voneinander hergestellt und nur durch das Netz 24 fixiert.

Das Testfeld 20 besteht aus einer Reagenzschicht 20a und einem Unterlegpapier 20b. Das Testfeld 21 besteht aus einer Reagenzschicht 21a und einem Unterlegpapier 21b. Darunter befindet sich eine Metallfolie 21c. Das Testfeld 22 besteht nur aus einer Reagenzschicht 22a. Unter der Reagenzschicht 23a des Testfeldes 23 ist eine Metallfolie 23b eingeklemmt.

Aus Fig. 2 wird deutlich, daß die einzelnen Testfelder sehr verschieden aufgebaut sein können. Im vorliegenden Fall sind zwei der Testfelder, nämlich die Testfelder 21 und 23, mit einer Metallfolie versehen, damit sie induktiv aufgeheizt werden können. Der thermische Kontakt zwischen den Metallfolien und dem Reagenzfeld ist im Falle des Testfeldes 23 ohne weiteres sichergestellt, weil sich beide Schichten vollflächig berühren.

Das Testfeld 21 macht deutlich, daß die Erfindung nicht auf derartige einfache Fälle beschränkt ist. In diesem Fall trennt das Unterlegpapier 21b die Reagenzschicht 21a von der Metallfolie 21b. Der Wärmetransport durch das Unterlegpapier 21b (im feuchten Zustand) ist jedoch ohne weiteres ausreichend um einen thermischen Kontakt im Sinne der Erfindung zu gewährleisten. Entsprechend kann auch bei anderen Testträgeraufbauten ein guter thermischer Kontakt gewährleistet sein, obwohl sich die metallisch leitende Schicht und das Testfeld nicht unmittelbar berühren. Beispielsweise können sie durch eine Klebstoffschicht oder eine dazwischen befindliche Flüssigkeitstransportschicht miteinanderverbunden sein.

Vorzugsweise ist die metallisch leitende Schicht, wie dargestellt, flächengleich mit dem Testfeld. Dadurch wird eine gleichmäßige Erwärmung der gesamten Testfeldfläche erreicht.

Wenn ein Testträger mehrere Testfelder hat, die temperiert werden sollen, wie im Fall der Fig. 2 die Testfelder 21 und 23, muß selbstverständlich auch das entsprechende Auswertegerät hierfür eingerichtet sein. In einfachen Fällen, bei denen der Testträger in seiner Längsrichtung in das Auswertegerät eingelegt oder durch dieses transportiert wird, kann eine einzige Induktionsheizeinrichtung genügen, in deren Wirkbereich die entsprechenden Testfelder nacheinander positioniert werden.

Sow eit bei einem leistungsfähigen Auswertegerät, wie es in Fig. 1 dargestellt ist, die Mehrfachteststreifen quer zu ihrer Längsrichtung transportiert werden, wobei die Auswertung der Testfelder in einer einzigen Meßposition gleichzeitig erfolgt, muß jedem zu temperierenden Testfeld mindestens eine separate Induktionsheizeinrichtung zugeordnet sein. Wenn beispielsweise das Testfeld 4 in Fig. 1 ebenfalls eine metallisch leitende Schicht hätte, wäre ein zweite Reihe von Induktionsheizeinrichtungen erforderlich, in deren Wirkbereich das Testfeld 4 jeweils an den Haltepositionen liegt.

**Patentansprüche**

1.   Analysesystem zur Bestimmung eines Bestandteils einer Flüssigkeit mit
einem Testträger (1), welcher mindestens ein Testfeld (2,3,4) aufweist, und
einem Auswertegerät zur Messung einer für die Konzentration des zu bestimmenden Bestandteils charakteristischen meßbaren Veränderung des Testfeldes
wobei eine Temperierungseinrichtung vorgesehen ist, durch die das Testfeld vor der Auswertung auf eine erhöhte Temperatur aufgeheizt wird,
**dadurch gekennzeichnet, daß**
der Testträger mindestens eine einem Testfeld (2) zugeordnete metallisch leitende Schicht (12) aufweist, welche parallel zu dem Testfeld (2) verläuft und in thermischem Kontakt zu ihm steht,
das Auswertegerät eine Induktionsheizeinrichtung (13,14,15) aufweist, welche ein magnetisches Wechselfeld erzeugt und
die Führung (6,8) des Testträgers (1) in dem Auswertegerät so gestaltet ist, daß sich die metallisch leitende Schicht (12) zumindest vor der Messung im Wirkbereich des magnetisches Wechselfeldes befindet.

2. Analysesystem nach Anspruch 1,
**dadurch gekennzeichnet, daß**
die metallisch-leitende Schicht ferromagnetisch ist.

3. Analysesystem nach Anspruch 1,
**dadurch gekennzeichnet, daß**
die metallisch leitende Schicht (12) eine Metallfolie ist.

4. Analysesystem nach Anspruch 1,
**dadurch gekennzeichnet, daß**
der Testträger ein Teststreifen (19) mit mehreren nebeneinander angeordneten Testfeldern ist, wobei nur einem Teil der Testfelder (20-23) eine metallisch leitende Schicht (21c, 23c) zugeordnet ist.

5. Analysesystem nach Anspruch 1,
**dadurch gekennzeichnet, daß**
der Testträger ein Teststreifen mit mehreren nebeneinander angeordneten Testfeldern ist, wobei mindestens zwei Testfeldern verschieden dicke, metallisch leitende Schichten zugeordnet sind.

6. Analysesystem nach Anspruch 1,
**dadurch gekennzeichnet, daß**
der Testträger ein Teststreifen mit mehreren nebeneinander angeordneten Testfeldern ist, wobei mindestens zwei Testfeldern metallisch leitende Schichten aus verschiedenen Materialien zugeordnet sind.

7. Analysesystem nach Anspruch 1,
**dadurch gekennzeichnet, daß**
das Testfeld aus einer oder mehreren Schichten (21a,21b) besteht, die auf einer Basisschicht (5) mit Hilfe eines das Testfeld überspannenden Netzes (24) befestigt sind und die metallisch leitende Schicht (21c) zwischen den Testfeldschichten und der Basisschicht angeordnet ist.

8. Analysesystem nach Anspruch 1,
**dadurch gekennzeichnet, daß**
mehrere Testträger in dem Auswertegerät schrittweise transportiert werden, wobei zwischen den Transportschritten Stillstandszeiten liegen, während denen die Testträger an mehreren Haltepunkten anhalten und daß an mehreren der Haltepunkte jeweils eine Induktionsheizeinrichtung (13,14,15) vorgesehen ist.

## Claims

1. An analytical system for determining a component of a fluid comprising:
   a test carrier (1) having at least one test field (2, 3, 4) and
   an evaluating instrument for measuring a measurable change in the test field, which is characteristic of the concentration of the component to be determined,
   wherein a temperature control device is provided, by which the test field is heated to an elevated temperature prior to the evaluation,
   characterised in that
   the test carrier is provided with at least one metallic conducting layer (12) which is assigned to a test field (2) and which extends in parallel to the test field (2) and is in thermal contact therewith,
   the evaluating instrument comprises an induction heater (13, 14, 15) which produces an alternating magnetic field and the guiding system (6, 8) of the test carrier (1) in the evaluating instrument is designed such that the metallic conducting layer (12) is located in the range of effect of the alternating magnetic field at least prior to the measurement.

2. An analytical system as claimed in Claim 1, characterised in that the metallic conducting layer is ferromagnetic.

3. An analytical system as claimed in Claim 1, characterised in that the metallic conducting layer (12) is a metal foil.

4. An analytical system as claimed in Claim 1, characterised in that the test carrier is a test strip (19) having a plurality of test fields arranged one beside another, where a metallic conducting layer (21c, 23c) is assigned only to part of the test fields (20-23).

**5.** An analytical system as claimed in Claim 1, characterised in that the test carrier is a test strip having a plurality of test fields arranged one beside another, wherein at least two test fields are assigned metallic conducting layers of different thickness.

**6.** An analytical system as claimed in Claim 1, characterised in that the test carrier is a test strip having a plurality of test fields arranged one beside another, wherein at least two test fields are assigned metallic conducting layers composed of different materials.

**7.** An analytical system as claimed in Claim 1, characterised in that the test field consists of one or more layers (21a, 21b) which are secured on a base layer (5) by means of a net (24) stretched over the test field and that the metallic conducting layer (21c) is arranged between the test field layers and the base layer.

**8.** An analytical system as claimed in Claim 1, characterised in that a plurality of test carriers are transported in stepped fashion in the evaluating instrument, where stationary periods occur between the transport steps, during which stationary periods the test carriers stop at a plurality of stopping points, and that a respective induction heating device (13, 14, 15) is arranged at several of the stopping points.

**Revendications**

**1.** Système d'analyse pour la détermination d'un composant de liquide comprenant :

- un support de test (1) qui comporte au moins une zone de test (2, 3, 4), et
- une unité d'exploitation pour mesurer une variation mesurable caractéristique de la concentration du composant à déterminer dans lequel est prévu un équipement de régulation de température par lequel la zone de test est portée à une température élevée avant l'utilisation, caractérisé en ce que
  le support de test comporte au moinsune couche (2) principalement métallique disposée sur la zone de test (2), cette couche se trouvant parallèle à la zone de test (2) et demeurant en contact thermique avec celle-ci ;
  l'unité d'exploitation comporte un dispositif d'induction (13, 14, 15) qui produit un champ alternatif et la glissière (6, 8) du support de test (1) est formé de telle façon qu'elle se trouve avant la mesure au moins dans la zone de fonctionnement du champ alternatif magnétique de la couche conductrice métallique (12).

**2.** Système d'analyse selon la revendication 1, caractérisé en ce que la couche conductrice métallique est ferromagnétique.

**3.** Système d'analyse selon la revendication 1, caractérisé en ce que la couche conductrice métallique (12) est une feuille métallique.

**4.** Système d'analyse selon la revendication 1, caractérisé en ce que le support de test est une bande de test (19) comportant plusieurs zones de test disposées côte à côte, dans laquelle une couche conductrice métallique, (21c, 23c) est disposée sur une partie seulement de la zone de test (20, 23).

**5.** Système d'analyse selon la revendication 1, caractérisé en ce que le support de test est une bande de test comportant plusieurs zones de test disposées côte à côte, dans laquelle au moins deux couches conductrice métalliques, d'épaisseur variable auxquelles sont appliquées des champs alternatifs.

**6.** Système d'analyse selon la revendication 1, caractérisé en ce que le support de test est une bande de test comportant plusieurs champs alternatifs disposés côte à côte, dans lequel au moins deux couches conductrice métalliques de zone de test sont constitués de divers matériaux.

**7.** Système d'analyse selon la revendication 1, caractérisé en ce que la zone de test est constituée de une ou plusieurs couches (21a, 21b) qui sont fixées sur une couche de base (5) à l'aide d'une grille de couverture de zone de test (24) et la couche conductrice métallique (21) est disposée entre la couche de zone de test et la couche de base.

**8.** Système d'analyse selon la revendication 1, caractérisé en ce que plusieurs supports de test sont transportées pas à pas dans l'unité d'exploitation, dans lequel entre les pas de transport des temps d'arrêt sont ajustés pendant lesquels les supports de test sont immobilisés en plusieurs points d'arrêt et en ce que pour chacun de cette multiplicité de points d'arrêt est prévu un dispositif d'induction (13, 14, 15).

FIG.1

FIG.2

EP 0 320 732 B1